# EUROPEAN PATENT APPLICATION

(11) **EP 4 516 419 A1**
(43) Date of publication of application: **05.03.2025**
(21) Application number: 23842603.5
(22) Date of filing: 13.02.2023
(51) Int. Cl.: B21B 37/68, B21B 1/22, B21B 37/00, B21B 37/28, B21B 38/02, B21C 51/00

(54) **METHOD FOR SETTING ROLLING CONDITION FOR COLD ROLLING MILL, COLD ROLLING METHOD, METHOD FOR MANUFACTURING STEEL SHEET, DEVICE FOR SETTING ROLLING CONDITION FOR COLD ROLLING MILL, AND COLD ROLLING MILL**

(30) Priority: 20.07.2022 JP 2022115192
(71) Applicant: JFE Steel Corporation, Tokyo 100-0011 (JP)
(72) Inventor: FUJITA, Noriki, Tokyo 100-0011 (JP); AOE, Shinichiro, Tokyo 100-0011 (JP); FUJISAWA, Takuya, Tokyo 100-0011 (JP); MATSUBARA, Yukihiro, Tokyo 100-0011 (JP); NUMAZAWA, Yoshinori, Tokyo 100-0011 (JP); HARADA, Yoshimitsu, Tokyo 100-0011 (JP)
(74) Representative: Hoffmann Eitle
(86) International application number: PCT/JP2023/004758
(87) International publication number: WO 2024/018665

(57) **Abstract**

A cold rolling mill rolling condition setting method is a method in which a prediction model is generated with an explanatory variable and an objective variable, the explanatory variable being first multi-dimensional data obtained by transforming past rolling performance data including three-dimensional steel sheet information including information regarding a portion outside a sheet edge of the roll target material on an entry side of the cold rolling mill into multi-dimensional data, the objective variable being a controlled variable of a steering roll and a press position of the cold rolling mill. The method includes a step of estimating at least one of the controlled variable of the steering roll and the press position of the cold rolling mill, the estimation being performed by inputting second multi-dimensional data to the prediction model, the second multi-dimensional data being generated from the three-dimensional steel sheet information including the information regarding the portion outside the sheet edge of the roll target material on the entry side of the cold rolling mill.

## Description

### Field

The present invention relates to a cold rolling mill rolling condition setting method, a cold rolling method, a steel sheet manufacturing method, a cold rolling mill rolling condition setting device, and a cold rolling mill.

### Background

When cold rolling a roll material such as a cold-rolled thin steel sheet with, the cold rolling is to be typically performed with a stabilized sheet running property of the roll material by obtaining a good shape (or flatness) of the roll material while maintaining favorable thickness accuracy in the longitudinal direction and the width direction of the roll material. On the other hand, for the purpose of suppressing fuel consumption with reduced weight and the like, there is an increasing need for a difficult-to-roll material such as a thin hard material with a high load and a thin pre-rolling sheet thickness. During cold rolling of such a difficult-to-roll material, in order to suppress a rolling load, the difficult-to-roll material is thinned by hot rolling in a preceding step and then sent to a cold rolling step.

In recent years, many of the control factors of the cold rolling mill are automatically controlled by an actuator mounted on the cold rolling mill, leading to a decreased opportunity for an operator to set the control factors of the cold rolling mill. Still, at the time of cold rolling of the difficult-to-roll material as described above, there is a case where the material is joined to the next coil with a remaining bend of the coil tip/tail end due to the shape defect at the time of hot rolling.

When the bend or shape defect sharply fluctuate in the longitudinal direction of the coil, it is often difficult to absorb, with automatic control, fluctuations against correction of roll deflection such as a rolling load, roll gap, work roll bender, intermediate roll shift, and roll expansion by thermal crown of a cold rolling mill. Note that the rolling load also includes a forward slip ratio and torque calculated in association with the rolling load.

In such a case, the operator sets a pass schedule and a shape control actuator so as not to hinder productivity while satisfying the facility constraint of the cold rolling mill. For this reason, in recent years, the operating speed of the cold rolling mill and resultant productivity are likely to vary depending on the experience and subjectivity of the operator.

In such a background, Patent Literature 1 proposes a method of performing learning of past operating conditions using a neural network and performing mill setup of a cold rolling mill using a result of the learning. Patent Literature 2 proposes a method of performing shape control by machine learning using image information contributing to the shape after cold rolling.

### Citation List

### Patent Literature

Patent Literature 1: JP 6705519 B
Patent Literature 2: JP 2021-30280 A

### Summary

### Technical Problem

However, with the method described in Patent Literature 1, even when the cold rolling mill has an optimum operating condition at the time of mill setup, an occurrence of fluctuation of the sheet crown in the longitudinal direction would lead to a large fluctuation in the shape of the roll material on the delivery side of the cold rolling mill. This leads to a possibility of restriction on the rolling speed due to the shape defects or an occurrence of breakage of the roll material in the worst case. On the other hand, the method described in Patent Literature 2 has difficulty in quantitatively grasping a state such as bending or a shape defect of the coil and giving a feedback to the shape control actuator.

The present invention has been made in view of the above problems, and one object is to provide a cold rolling mill rolling condition setting method and a cold rolling mill rolling condition setting device capable of setting rolling conditions for performing cold rolling with high productivity while ensuring stability of cold rolling even when cold rolling a difficult-to-roll material with a high load and a small pre-rolling sheet thickness. Another object of the present invention is to provide a cold rolling method and a cold rolling mill capable of performing cold rolling with high productivity while ensuring stability in cold rolling even when a difficult-to-roll material with a high load and a small pre-rolling sheet thickness is rolled with cold rolling. Still another object of the present invention is to provide a steel sheet manufacturing method capable of manufacturing a steel sheet with high yield.

### Solution to Problem

To solve the problem and achieve the object, a cold rolling mill rolling condition setting method according to the present invention is the method of setting a target rolling condition of a cold rolling mill when a roll target material undergoes cold rolling using a prediction model that predicts a state of the roll target material that has undergone the cold rolling, the prediction model being generated with an explanatory variable and an objective variable, the explanatory variable being first multi-dimensional data obtained by transforming past rolling performance data including three-dimensional steel sheet information including information regarding a portion outside a sheet edge of the roll target material on an entry side of the cold rolling mill into multi-dimensional data, the objective variable being a controlled variable of a steering roll and a press position of the cold rolling mill. The method includes a step of estimating at least one of the controlled variable of the steering roll and the press position of the cold rolling mill, the estimation being performed by inputting second multi-dimensional data to the prediction model, the second multi-dimensional data being generated from the three-dimensional steel sheet information including the information regarding the portion outside the sheet edge of the roll target material on the entry side of the cold rolling mill.

Moreover, a cold rolling method according to the present invention includes a step of performing cold rolling of a roll target material using a target rolling condition of a cold rolling mill changed using the cold rolling mill rolling condition setting method according to the present invention.

Moreover, a steel sheet manufacturing method according to the present invention includes a step of manufacturing a steel sheet using the cold rolling method according to the present invention.

Moreover, a cold rolling mill rolling condition setting device according to the present invention is the device for setting a target rolling condition of a cold rolling mill when a roll target material undergoes cold rolling using a prediction model that predicts a state of the roll target material that has undergone the cold rolling, the prediction model being generated with an explanatory variable and an objective variable, the explanatory variable being first multi-dimensional data obtained by transforming past rolling performance data including three-dimensional steel sheet information including information regarding a portion outside a sheet edge of the roll target material on an entry side of the cold rolling mill into multi-dimensional data, the objective variable being a controlled variable of a steering roll and a press position of the cold rolling mill. The device includes a means for estimating at least one of the controlled variable of the steering roll and the press position of the cold rolling mill, the estimation being performed by inputting second multi-dimensional data to the prediction model, the second multi-dimensional data being generated from the three-dimensional steel sheet information including the information regarding the portion outside the sheet edge of the roll target material on the entry side of the cold rolling mill.

Moreover, a cold rolling mill according to the present invention includes the cold rolling mill rolling condition setting device according to the present invention.

### Advantageous Effects of Invention

According to the cold rolling mill rolling condition setting method and the cold rolling mill rolling condition setting device of the present invention, it is possible to set rolling conditions for performing cold rolling with high productivity while ensuring stability of cold rolling even when a difficult-to-roll material with a high load and a small pre-rolling sheet thickness. In addition, according to the cold rolling method and the cold rolling mill of the present invention, it is possible to perform cold rolling with high productivity while ensuring stability of cold rolling even when cold rolling a difficult-to-roll material with a high load and a small pre-rolling sheet thickness. Further, according to the steel sheet manufacturing method of the present invention, it is possible to manufacture a steel sheet with high yield.

### Brief Description of Drawings

FIG. 1 is a schematic diagram illustrating a configuration of a cold rolling mill according to an embodiment of the present invention.
FIG. 2 is a block diagram illustrating a configuration of an arithmetic unit illustrated in FIG. 1.
FIG. 3 is a diagram illustrating an example of multi-dimensional array information.
FIG. 4 is a diagram illustrating a configuration example of an actuator prediction model.
FIG. 5 is a flowchart illustrating a flow of processing of transforming multi-dimensional array information into one-dimensional information.
FIG. 6 is a flowchart illustrating a flow of processing performed by a prediction model execution section.

### Description of Embodiments

Hereinafter, a cold rolling mill rolling condition setting method, a cold rolling method, a steel sheet manufacturing method, a cold rolling mill rolling condition setting device, and a cold rolling mill according to an embodiment of the present invention will be described with reference to the drawings. Note that the following embodiments illustrate devices and methods for embodying the technical idea of the present invention, and are not to be limited to the material, shape, structure, arrangement, and the like of the components in the following embodiments. The drawings are schematic illustrations.
For this reason, it should be noted that the relationship, ratio, and the like between the thickness and the planar dimensions are different from actual measurements, and there are portions in which the relationship and ratio of the dimensions are different between the drawings.

### [Configuration of cold rolling mill]

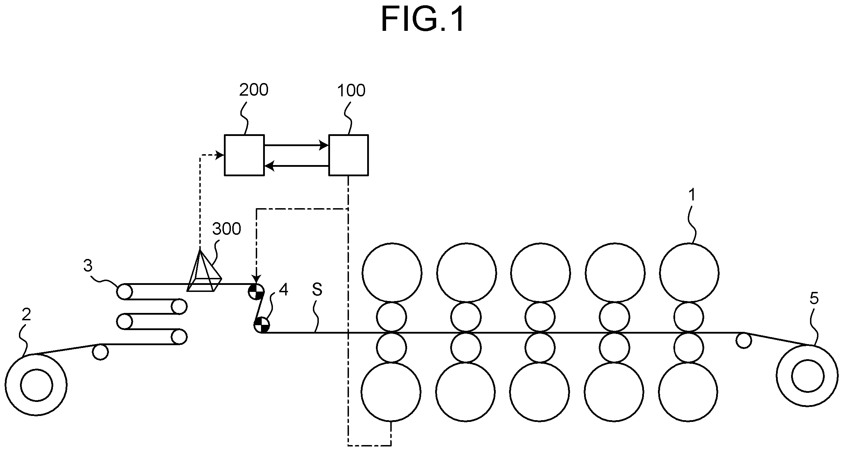

First, a configuration of a cold rolling mill according to an embodiment of the present invention will be described with reference to FIG. 1. In the present description, "cold rolling" may be simply referred to as "rolling", and thus, "cold rolling" and "rolling" are synonymous in the present description. In the following description, a steel sheet will be described as an example of a roll material (roll target material) to be rolled by a cold rolling mill. However, the roll material is not limited to a steel sheet, and may be other metal sheet such as an aluminum sheet.

FIG. 1 is a schematic diagram illustrating a configuration of a cold rolling mill according to an embodiment of the present invention. As illustrated in FIG. 1, a cold rolling mill 1 according to an embodiment of the present invention is a tandem cold rolling mill provided with five rolling stands, namely, a first rolling stand to a fifth rolling stand (#1STD to #5STD) in order from an entry side (left side as viewed in the plane of drawing of FIG. 1) toward an delivery side (right side as viewed in the plane of drawing of FIG. 1) of a steel sheet S. In the cold rolling mill 1, devices (not illustrated) such as a tension roll and a differential roll, a sheet thickness meter, and a profilometer are appropriately installed between adjacent rolling stands. The configuration of the rolling stands, a conveyor of the steel sheet S, and the like are not particularly limited, and known technologies are applicable.

In the embodiment illustrated in FIG. 1, the steel sheet S rolled by the hot rolling line (not illustrated) is discharged from a pay-off reel 2 and then passes through an entry-side looper 3 and a steering roll 4. Next, the steel sheet S is cold-rolled by the cold rolling mill 1 and then wound around a coiler 5. The length of the entry-side looper 3 and the number of the steering rolls 4 are not particularly limited.

### [Actuator prediction model]

Next, an actuator prediction model according to an embodiment of the present invention will be described with reference to FIGS. 1 to 6.

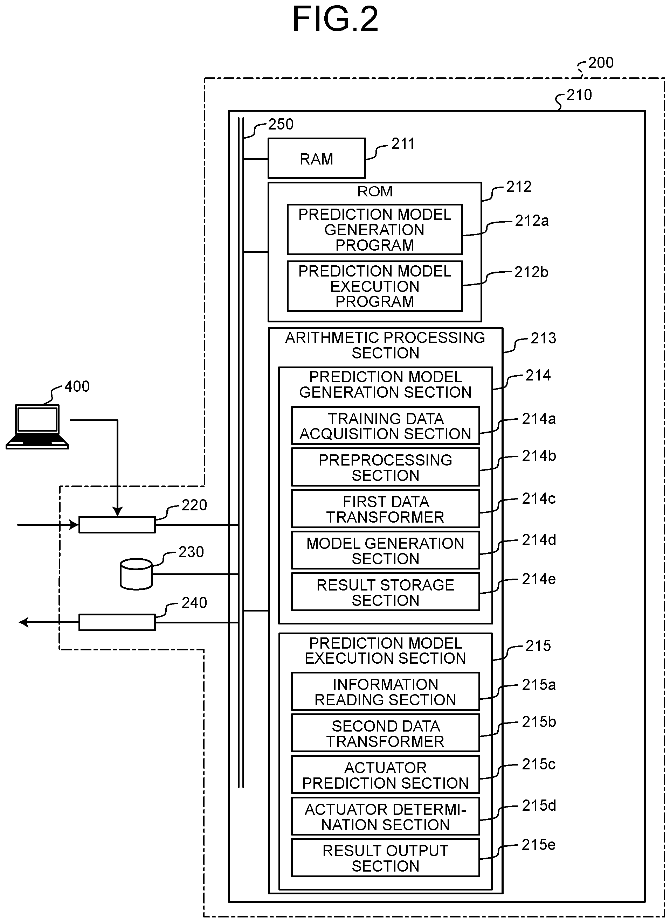

Functions related to the actuator prediction model according to an embodiment of the present invention are implemented by a rolling control device 100, an arithmetic unit 200, and a steel sheet three-dimensional information measurement device 300 illustrated in FIG. 1 and by an operation monitoring device 400 illustrated in FIG. 2.

The rolling control device 100 controls rolling conditions of the cold rolling mill 1 based on a control signal from the arithmetic unit 200.

FIG. 2 is a block diagram illustrating a configuration of the arithmetic unit 200 illustrated in FIG. 1. As illustrated in FIG. 2, the arithmetic unit 200 includes an arithmetic device 210, an input device 220, a storage device 230, and an output device 240.

The arithmetic device 210 is connected, in wired connection, to the input device 220, the storage device 230, and the output device 240 via a bus 250. However, the arithmetic device 210, the input device 220, the storage device 230, and the output device 240 may be connected not only by this mode of connection, but also by wireless connection, or may be connected in a combination of wired and wireless connections.

The input device 220 functions as an input port to which various types of information are input. For example, the input device 220 receives input of control information of the cold rolling mill 1 by the rolling control device 100. In addition, the input device 220 also receives rolling entry-side steel sheet information (three-dimensional steel sheet information including information regarding a portion outside the sheet edge of the steel sheet S on the entry side of the cold rolling mill 1 (for example, steel sheet coordinates, bending, steepness, and the like) ) measured by the steel sheet three-dimensional information measurement device 300 and information from the operation monitoring device 400.

The operation monitoring device 400 is installed in a production line of the steel sheet S, and includes, for example, an input device (for example, a keyboard, a mouse, and the like) for an operator to perform various settings, a display device (for example, a liquid crystal display) for monitoring a rolling status, and the like. The information from the operation monitoring device 400 includes execution command information regarding the actuator prediction model. The information from the operation monitoring device 400 includes information regarding the steel sheet S being a roll target (preprocessing conditions, steel type, and size), and cold rolling condition information (numerical information, character information, and image information) set by a process computer or an operator before cold rolling.

The storage device 230 is a device that includes components such as a hard disk drive, a semiconductor drive, an optical drive, for example, and that stores information necessary for the present system (information necessary for implementation of the functionalities of a prediction model generation section 214 and the prediction model execution section 215 described below).

The information necessary for implementing the function of the prediction model generation section 214 includes, for example, the rolling entry-side three-dimensional steel sheet information measured by the steel sheet three-dimensional information measurement device 300, required characteristics of the steel sheet S (steel type, product sheet thickness, sheet width, etc.), and facility constraints of the cold rolling mill 1. In addition, the information necessary for implementing the functions of the prediction model generation section 214 includes rolling information after the steel sheet S passes through the welding point (including coil information and shape actuator position) and the property of coolant used in the rolling stand. In addition, the information necessary for implementing the functions of the prediction model generation section 214 includes information indicating an explanatory variable related to cold rolling such as a rolling condition (including a target rolling speed) and an objective variable such as a cylinder position of the steering roll 4 and press position information in the first rolling stand.

Examples of the information necessary for implementation of the function of the prediction model execution section 215 include an actuator prediction model for each of the rolling states of the steel sheet S generated by the prediction model generation section 214 and various types of information to be input to the actuator prediction model.

The output device 240 functions as an output port that outputs a control signal from the arithmetic device 210 to the rolling control device 100.

The operation monitoring device 400 includes any type of display device such as a liquid crystal display or an organic display. The operation monitoring device 400 receives various types of information indicating operation states of the cold rolling mill 1 from the rolling control device 100, and displays the received information on a driving screen (operation screen) for the operator to monitor the operation state of the cold rolling mill 1.

The arithmetic device 210 includes random access memory (RAM) 211, read only memory (ROM) 212, and an arithmetic processing section 213.

The ROM 212 stores a prediction model generation program 212a and a prediction model execution program 212b which are computer programs.

The arithmetic processing section 213 has an arithmetic processing function and is connected to the RAM 211 and the ROM 212 via a bus 250.

The RAM 211, the ROM 212, and the arithmetic processing section 213 are connected to the input device 220, the storage device 230, and the output device 240 via the bus 250.

The arithmetic processing section 213 includes a prediction model generation section 214 and a prediction model execution section 215 as functional blocks.

The prediction model generation section 214 is a processing unit that generates an actuator prediction model. The actuator prediction model is generated with an explanatory variable and an objective variable, in which first multi-dimensional data obtained by transforming past rolling performance data into multi-dimensional data is used as the explanatory variable, and a controlled variable of the steering roll 4 and a press position of the cold rolling mill 1 is used as the objective variable. The "past rolling performance data" includes three-dimensional steel sheet information including information regarding the portion outside the sheet edge of the steel sheet S on the entry side of the cold rolling mill 1.

The prediction model generation section 214 uses a machine learning method in which three-dimensional steel sheet information including information regarding the portion outside the sheet edge of the steel sheet S at a pre-rolling stage and the actuator amount (the cylinder amount of the steering roll 4 and the press position of the first rolling stand) are associated with each other among the past rolling performances in the cold rolling mill 1.

For example, by changing the cylinder amount of the steering roll 4 in advance according to the shape and the bend of the steel sheet S, it is possible to adjust the winding position of the steel sheet S onto the steering roll 4, enabling centering to be performed even with occurrence of sudden meandering of the steel sheet S. Similarly, by controlling the press position (leveling) of the first rolling stand so as to correct the partial elongation and bend of the steel sheet S, it is possible to reduce the partial elongation and the bend on the rolling delivery side.

In the present embodiment, a neural network model is used as an actuator prediction model to be created by the machine learning method. Note that the machine learning method is not limited to the neural network, and other known machine learning methods may be adopted.

The prediction model generation section 214 includes a training data acquisition section 214a, a preprocessing section 214b, a first data transformer 214c, a model generation section 214d, and a result storage section 214e. When having received an instruction to generate an actuator prediction model from the operation monitoring device 400, the prediction model generation section 214 executes the prediction model generation program 212a stored in the ROM 212. This allows the prediction model generation section 214 to function as the training data acquisition section 214a, the preprocessing section 214b, the first data transformer 214c, the model generation section 214d, and the result storage section 214e. The actuator prediction model is updated each time of execution of the prediction model generation section 214.

As preprocessing for generating an actuator prediction model, the training data acquisition section 214a acquires a plurality of pieces of training data including input performance data (explanatory variable) and output performance data (objective variable). The input performance data includes three-dimensional steel sheet information including information regarding the portion outside the sheet edge of the steel sheet from the steel sheet three-dimensional information measurement device 300 among pieces of past rolling performance data. In addition, the output performance data includes the actuator amount (the cylinder amount of the steering roll 4 and the press position of the first rolling stand) among pieces of past rolling performance data.

The training data acquisition section 214a acquires the input performance data and the output performance data from the storage device 230 to create training data. Each training data includes a set of input performance data and output performance data. In addition, the created training data is stored in the storage device 230. Note that the training data acquisition section 214a may supply the training data to the preprocessing section 214b or the model generation section 214d without storing the training data in the storage device 230.

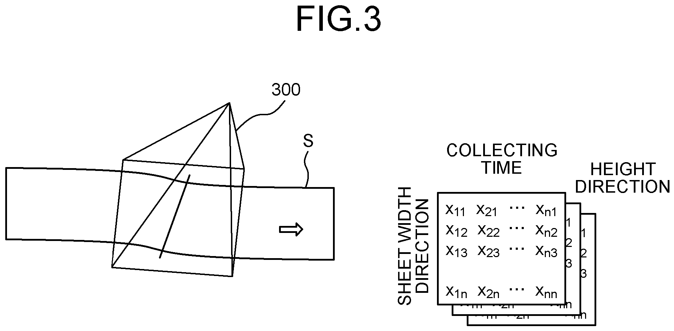

The input performance data includes multi-dimensional array information in which explanatory variables are joined in the time direction. In the present embodiment, information as illustrated in FIG. 3 is adopted as the multi-dimensional array information, for example.

FIG. 3 illustrates an example in which the steel sheet three-dimensional information measurement device 300 has a plurality of measurement points in the width direction including the portion outside the sheet edge of the steel sheet S. In this case, the training data acquisition section 214a uses the measurement point group continuously measured in the longitudinal direction of the steel sheet S, as the input performance data. By taking in information of the portion outside the sheet edge of the steel sheet S (the portion corresponding to the outside of the sheet edge of the steel sheet S), it is possible to perform not only the detection of a shape defective portion of the coil itself but also obtain a bend in the longitudinal direction of the coil as input data. A measurement method of the steel sheet three-dimensional information measurement device 300 is not particularly limited, and may be a contact type or a non-contact type (such as two-dimensional laser, 3D scanner, γ-ray, and X-ray). In addition, data obtained by averaging the measurement point groups or data subjected to processing such as spline smoothing may be used as the input performance data. Note that the information regarding the portion outside the sheet edge to be included in the input performance data is preferably less than 10% of the sheet width of the steel sheet S per side.

Here, there are assumable cases including a case where past rolling performance data is not stored in the storage device 230 (for example, a case where rolling conditions or steel type conditions have no past performance) or a case where the sample amount is small. In this case, the training data acquisition section 214a requests the operator to execute cold rolling one or a plurality of times without using the actuator prediction model. In addition, the more the number of pieces of training data stored in the storage device 230, the higher the prediction accuracy to be achieved by the actuator prediction model. Therefore, when the number of training data is less than a preset threshold, the training data acquisition section 214a may request the operator to execute cold rolling without using the actuator prediction model until the number of pieces of data reaches the threshold.

The preprocessing section 214b processes the training data acquired by the training data acquisition section 214a to be adapted for generation of the actuator prediction model. Specifically, the preprocessing section 214b standardizes (normalizes) the value range of the input performance data between 0 to 1 as necessary in order to allow the rolling performance data constituting the training data to be loaded to the neural network model.

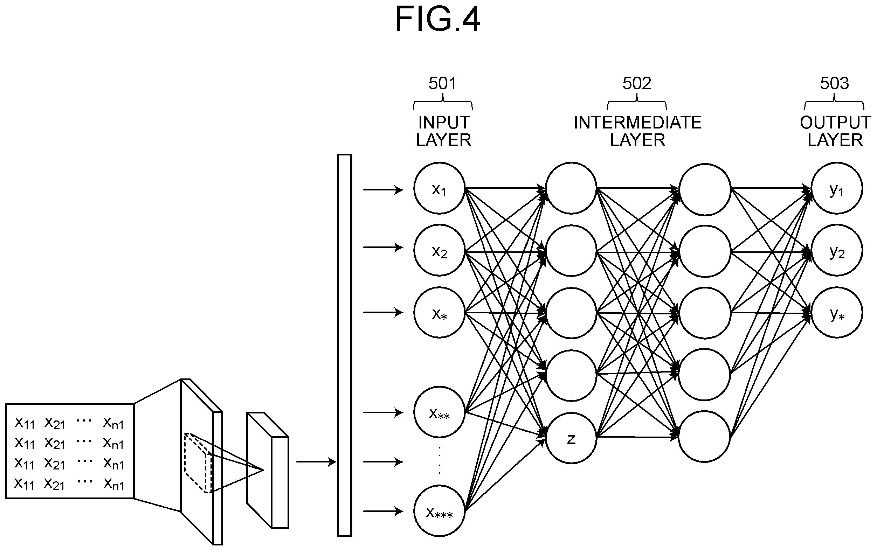

The input performance data is multi-dimensional information. Therefore, the first data transformer 214c performs dimensionality reduction on the input performance data in a state where features are retained using a convolutional neural network to transform the data into one-dimensional information (refer to FIG. 4). The input performance data is connected to an input layer 501 of the neural network model illustrated in FIG. 4 as one-dimensional information.

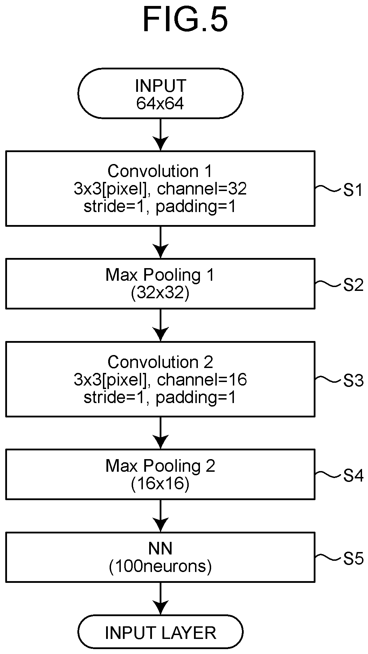

Here, a processing example of the first data transformer 214c will be described with reference to FIG. 5. FIG. 5 is a flowchart illustrating a flow of processing of transforming multi-dimensional array information into one-dimensional information. As illustrated in FIG. 5, the processing of transforming the multi-dimensional array information into the one-dimensional information, that is, the method of storing the multi-dimensional array information uses a structure in which inputs and outputs of a plurality of filters are connected in multiple stages. That is, the processing of transforming the multi-dimensional array information into the one-dimensional information includes, in order from the input side, a first convolution step S1, a first pooling step S2, a second convolution step S3, a second pooling step S4, and a full connection step S5.

In the first convolution step S1, the first data transformer 214c uses multi-dimensional array information of a row × column pattern of 64 × 64 as input, and outputs a first feature map of a pattern of 64 × 64 by convolution operation. The first feature map indicates where and what type of local features are present in the input array. In the convolution operation, for example, a filter of a row × column pattern of 3 × 3 pixels and 32 channels is used, an application interval of the filter is set to 1, and a length of filling (padding) the periphery with 0 is set to 1.

In the first pooling step S2, the first data transformer 214c uses the first feature map output in the first convolution step S1 as an input, and sets the maximum value of the first feature map within a row × column pattern of 3 × 3 pixels as a new one pixel. The first data transformer 214c performs such an operation over the entire map while shifting pixels. With this operation, in the first pooling step S2, the first data transformer 214c outputs a second feature map obtained by compressing the first feature map.

In the second convolution step S3, the first data transformer 214c uses the second feature map as input, and outputs a third feature map by convolution operation. In the convolution operation, for example, a filter of a row × column pattern of 3 × 3 pixels and 32 channels is used, an application interval of the filter is set to 1, and a length of filling (padding) the periphery with 0 is set to 1.

In the second pooling step S4, the first data transformer 214c uses the third feature map output in the second convolution step S3 as an input, and sets the maximum value of the third feature map within a row × column pattern of 3 × 3 pixels as a new one pixel. The first data transformer 214c performs such an operation over the entire map while shifting pixels. With this operation, in the second pooling step S4, the first data transformer 214c outputs a fourth feature map obtained by compressing the third feature map.

In the full connection step S5, the first data transformer 214c lines up the information of the fourth feature map output in the second pooling step S4. Subsequently, 100 neurons output from the full connection step S5 make the input layer 501 of the neural network model illustrated in FIG. 4. Note that the convolution method and the number of output neurons are not limited to those described above. Furthermore, the method of the convolutional neural network may be implemented by using a known model such as GoogleNet, VGG 16, MOBILENET, or

### EFFICIENTNET.

Returning to FIG. 2. The model generation section 214d performs machine learning using a plurality of pieces of training data (including information transformed by the first data transformer 214c) acquired by the preprocessing section 214b. With this operation, the model generation section 214d generates an actuator prediction model including the rolling entry-side three-dimensional steel sheet information as input performance data and the actuator amount as output performance data.

The present embodiment adopts a neural network as a machine learning method, and accordingly, the model generation section 214d generates a neural network model as the actuator prediction model. That is, the model generation section 214d generates a neural network model as an actuator prediction model that associates the input performance data and the output performance data in the training data processed for actuator prediction model generation. The neural network model is expressed by a functional formula, for example.

Specifically, the model generation section 214d performs setting of hyperparameters to be used for the neural network model, and performs learning with the neural network model using the hyperparameters. As an optimization calculation of the hyperparameter, the model generation section 214d first generates a neural network model in which some of the hyperparameters have been changed in stages for the training data, and selects the hyperparameter capable of achieving the highest prediction accuracy for the verification data.

Items usually set as the hyperparameter include, but not limited to, the number of hidden layers, the number of neurons in each hidden layer, the dropout rate in each hidden layer (blocking the transmission of neurons with a certain probability), the activation function in each hidden layer, and the number of outputs. In addition, examples of the hyperparameter optimization method can include, but not particularly limited to, a grid search of changing parameters in stages, a random search of randomly selecting parameters, or Bayesian optimization search.

Although the model generation section 214d is incorporated as a part of the arithmetic device 210, the configuration is not limited thereto. For example, the actuator prediction model may be generated and stored in advance, and they may be read as appropriate.

As illustrated in FIG. 4, the neural network model as the actuator prediction model in the present embodiment includes an input layer 501, an intermediate layer 502, and an output layer 503 in order from the entry side.

The multi-dimensional array information created in FIG. 3 undergoes dimensionality reduction by the training data acquisition section 214a in a state where the features are retained using the convolutional neural network, and is stored in the input layer 501 in a state of being transformed into one-dimensional information.

The intermediate layer 502 includes a plurality of hidden layers, and each of the hidden layers includes a plurality of neurons. The number of hidden layers formed in the intermediate layer 502 and the number of neurons arranged in each hidden layer are not particularly limited. In the intermediate layer 502, transmission of a neuron from a certain neuron to a subsequent hidden layer is performed via an activation function together with weighting of a variable by a weighting factor. As the activation function, known functions such as a Sigmoid function, a hyperbolic tangent function, or a ramp function can be used.

The information of the neurons transmitted by the intermediate layer 502 is connected to the output layer 503, and is output as a final actuator amount (actuator information). The number of outputs to be formed in the output layer 503 is not particularly limited. The weighting factor in the neural network model is gradually optimized based on the output result and the three-dimensional steel sheet information before the cold rolling of the steel sheet S in the past, and the actuator results at that time (the cylinder amount of the steering roll 4 and the press position of the first rolling stand), whereby learning is performed.

After the weighting factor of the neural network model has been learned, the model generation section 214d inputs evaluation data (three-dimensional steel sheet information of the steel sheet S being a roll target using the actuator prediction model) to the neural network model that has learned the weighting factor. With this operation, the model generation section 214d obtains an estimation result for the evaluation data.

Returning to FIG. **2****.** The result storage section 214e stores the training data, the evaluation data, and the parameters (weighting factors) of the neural network model in the storage device 230. In addition, the result storage section 214e stores the output result of the neural network model for the training data and the output result of the neural network model for the evaluation data in the storage device 230.

Before the cold rolling of the steel sheet S, the prediction model execution section 215 predicts the actuator position corresponding to the three-dimensional steel sheet information of the steel sheet S as the roll target using the actuator prediction model generated by the prediction model generation section 214. The prediction model execution section 215 then determines the actuator position of the steel sheet S being the roll target.

In order to perform the above processing, the prediction model execution section 215 includes an information reading section 215a, a second data transformer 215b, an actuator prediction section 215c, an actuator determination section 215d, and a result output section 215e. Here, when having received a signal notifying that cold rolling is being performed from the rolling control device 100 via the input device 220, the prediction model execution section 215 executes the prediction model execution program 212b stored in the ROM 212. With this operation, the prediction model execution section 215 functions as the information reading section 215a, the second data transformer 215b, the actuator prediction section 215c, the actuator determination section 215d, and the result output section 215e.

The information reading section 215a reads the rolling conditions of the steel sheet S being a roll target that have been set by a process computer and an operator in the operation monitoring device 400 from the storage device 230.

The second data transformer 215b performs convolution processing of transforming the multi-dimensional array information, which will be input data to the actuator prediction model, into one-dimensional information. Since the processing of the second data transformer 215b is the same as the processing of the first data transformer 214c, detailed description of the processing will be omitted. Moreover, the first data transformer 214c and the second data transformer 215b may be set as subroutine as one processing section.

The actuator prediction section 215c inputs the one-dimensional information that has undergone the convolution processing by the second data transformer 215b to the actuator prediction model, and predicts the actuator amount (the cylinder amount of the steering roll 4 and the press position of the first rolling stand) in the steel sheet S being the roll target. That is, the actuator prediction section 215c inputs the second multi-dimensional data generated out of the three-dimensional steel sheet information including information regarding the portion outside the sheet edge of the steel sheet S on the entry side of the cold rolling mill 1, to the actuator prediction model. With this configuration, at least one of the controlled variable of the steering roll 4 and the press position of the cold rolling mill 1 is estimated.

The actuator determination section 215d performs processing of determining whether the predicted actuator amount of the steel sheet S is within a separately set facility constraint threshold.

The result output section 215e operates when the predicted actuator amount of the steel sheet S is within the preset facility constraint threshold. The result output section 215e then outputs an operating condition (shape control actuator amount) for the determined three-dimensional steel sheet shape (three-dimensional steel sheet information) of the steel sheet S being the roll target, and performs feedforward control.

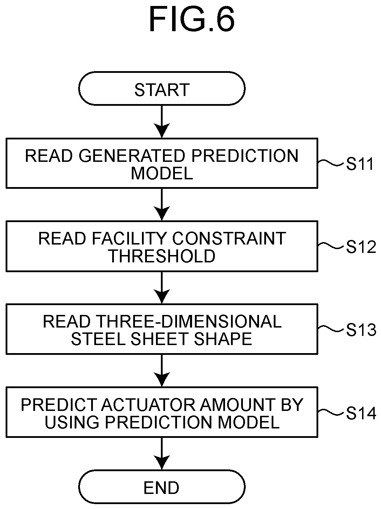

Next, processing of the prediction model execution section 215 will be described with reference to FIG. 6.

FIG. 6 is a flowchart illustrating a flow of processing of the prediction model execution section 215. As illustrated in FIG. 6, as first processing of step S11 in execution of the actuator prediction model, the information reading section 215a reads, from the storage device 230, a neural network model as an actuator prediction model corresponding to the required characteristics of the steel sheet S being a roll target.

Next, in the processing of step S12, the information reading section 215a reads a required facility constraint threshold stored in the storage device 230 from a host computer via the input device 220. Next, the information reading section 215a reads, in the processing of step S13, the three-dimensional steel sheet shape of the steel sheet S being a roll target stored in the storage device 230 from the host computer via the input device 220.

Next, as the processing of step S14, the actuator prediction section 215c predicts the actuator amount using the neural network model as the actuator prediction model read in the processing of step S11. The processing of step S14 is, specifically, a step of obtaining, by using a neural network model, the actuator amount for the steel sheet S during cold rolling corresponding to the input performance data arranged as a multi-dimensional array of the three-dimensional steel sheet shape of the steel sheet S being a roll target read in the processing of step S13. Note that the prediction result by the neural network model is output to the output layer 503 of the neural network model illustrated in FIG. 4.

In a case where the predicted actuator amount is within the facility constraint threshold, the result output section 215e transmits the changed actuator-related information to the rolling control device 100 via the output device 240, and the prediction model execution section 215 finishes the series of processing.

As described above, in the present embodiment, the prediction model generation section 214 generates an actuator prediction model by a machine learning method that associates past three-dimensional steel sheet shape performance including the portion outside the sheet edge of the steel sheet on the rolling entry side of the steel sheet S and the past actuator amount corresponding to the three-dimensional steel sheet shape performance.

In addition, the prediction model execution section 215 obtains the three-dimensional steel sheet shape of the steel sheet S as a roll target by the generated actuator prediction model during the cold rolling of the steel sheet S. When the obtained actuator prediction result for the three-dimensional steel sheet shape is within the facility constraint threshold, the prediction model execution section 215 determines the actuator amount for the three-dimensional steel sheet shape of the steel sheet S being a roll target. This makes it possible to implement shape control satisfying various constraints in the rolling operation independent of operator's experience and subjectivity, making it possible to maintain productivity while preventing troubles such as shape defects and breakage during cold rolling.

Furthermore, in the present embodiment, as an explanatory variable used for the actuator of the steel sheet S during cold rolling, numerical information collected from three-dimensional steel sheet shape performance including the portion outside the sheet edge is connected, and the multi-dimensional array information obtained is used as input data. This makes it possible to identify, on the neural network model, a factor having a large contribution to the shape defect during the cold rolling while considering the bend and the shape defect portion in the coil longitudinal direction in the vicinity of a coil joint.

### [Cold rolling method]

In the cold rolling method according to an embodiment of the present invention, the cold rolling of the steel sheet S is performed using the target rolling conditions of the cold rolling mill 1 changed using the rolling condition setting method described above. This makes it possible to perform cold rolling with high productivity while ensuring stability of cold rolling even when cold rolling a difficult-to-roll material with a high load and a small pre-rolling sheet thickness.

### [Steel sheet manufacturing method]

In the steel sheet manufacturing method according to an embodiment of the present invention, the steel sheet S is manufactured using the above-described cold rolling method. This makes it possible to manufacture the steel sheet S with good yield.

### [Modifications]

Although the embodiments of the present invention have been described above, the present invention is not limited thereto, and various modifications and improvements can be made. For example, in the present embodiment, the determination of actuator conditions of the steel sheet S by the actuator prediction model is to be performed over the entire length of the coil, but may be performed over a part of the coil. The cold rolling mill 1 is not limited to the four-stage rolling mill, but may be a multi-stage rolling mill such as a two-stage (2Hi) rolling mill or a six-stage (6Hi) rolling mill, and the number of rolling stands is not particularly limited. Furthermore, the rolling mill may be a cluster rolling mill or a Sendzimir rolling mill.

In addition, when the arithmetic unit 200 calculates an abnormal controlled variable exceeding the change upper and lower limit values or cannot calculate the controlled variable, the rolling control device 100 cannot execute control based on the command from the arithmetic unit 200. Therefore, it is preferable that the rolling control device 100 is not to perform the present implementation when the controlled variable from the arithmetic unit 200 is determined to be abnormal, when the controlled variable is not supplied from the arithmetic unit 200, or the like. In addition, when the measurement result from the steel sheet three-dimensional information measurement device 300 exceeds a past learning range, the rolling roll may be released to decelerate and pass the steel sheet in order to prevent a breakage trouble.

In the present embodiment, the steel sheet three-dimensional information measurement device 300 is installed on the upstream side of the steering roll 4, but may be installed on the downstream side. In this case, the objective variable is only the press position of the cold rolling mill 1. Further, when the feedback control of the press position by a first rolling stand delivery-side profilometer functions sufficiently, only the cylinder amount of the steering roll 4 may be used as the objective variable.

In addition, when the feedback control by the profilometer installed between the rolling stands of the cold rolling mill 1 is performed, there is a case where control hunting occurs around the present invention. Therefore, the rolling control device 100 may include a mechanism capable of adjusting the gain so as to suppress excessive controlled variables from the arithmetic unit 200.

In addition, although the output device 240 and the operation monitoring device 400 are not connected in the configuration example illustrated in FIG. 2, the devices may be communicably connected to each other. This makes it possible display the processing result of the prediction model execution section 215 (in particular, the shape prediction information of the steel sheet S during rolling by the actuator prediction section 215c and the changed rolling conditions determined by the actuator determination section 215d) on the driving screen of the operation monitoring device 400.

In the configuration example illustrated in FIG. 2, the prediction model is created and executed in the same arithmetic device 210, and is connected to the rolling control device 100, the steel sheet three-dimensional information measurement device 300, and the operation monitoring device 400 via the bus 250. However, the present invention is not limited to this configuration. For example, the prediction model may be created by a device other than the arithmetic device 210, and the created prediction model may be stored in the ROM 212 and executed by the prediction model execution section 215. Implementation Example

Hereinafter, the present invention will be described based on an implementation example.

Using a tandem cold rolling mill including all five rolling stands according to the embodiment illustrated in FIG. 1, an experiment was conducted in which a raw steel sheet for an electromagnetic steel sheet containing 2.5 to 3.0 mass%Si with a base material thickness of 2.0 to 2.6 mm and a sheet width of 1000 mm was rolled with cold rolling into a roll material with a finished thickness of 0.300 mm. As preliminary learning, first, a neural network model was trained using training data (3000 cases of past steel sheet rolling performance data). With this training, a neural network model used for actuator prediction was created by associating the past three-dimensional shape performance of the steel sheet at a pre-rolling stage with the past actuator performance.

In the invention example, as the past steel sheet pre-rolling performance data, the shape of the three-dimensional steel sheet shape including the portion outside the sheet edge was measured by a 3D scanner and used as input performance data in the form of multi-dimensional array information. As the past actuator information, the cylinder position of the steering roll installed succeeding the three-dimensional steel sheet shape measurement device and the press position performance in the first rolling stand were learned. At a stage when the rolling control device 100 was turned on after a preceding steel strip and a trailing steel strip were joined at the entry side of the tandem cold rolling mill, the actuator amount during the cold rolling was predicted by the generated neural network model.

Also in a comparative example, similarly to the invention example, an experiment was conducted in which a raw steel sheet, as a roll material, for an electromagnetic steel sheet containing 2.5 to 3.0 mass%Si with a base material thickness of 2.0 to 2.6 mm and a sheet width of 1000 mm was rolled with cold rolling to a finished thickness of 0.300 mm. In the comparative example, as the past steel sheet pre-rolling performance data, a plurality of laser displacement gauges were disposed in the steel sheet width direction, and the displacement of the steel sheet of only withing the sheet edge was associated with the actuator amount to generate a neural network model used for prediction of the actuator.

The number of breakage occurrences of the steel sheets after 100 coil rolling in the invention example and the comparative example is indicated in Table 1. As illustrated in Table 1, the comparative example indicates that sufficient learning was not performed for the bending of the coil. For this reason, the operation amount of the actuator did not follow the great fluctuation in the bend in the vicinity of the coil joint, causing the coil to deviate from the mill center of the cold rolling mill, leading to occurrence of a breakage trouble due to partial elongation or excessive tension on the edge.

**Table 1**

| No. | Preceding steel strip | | Trailing steel strip | | Actuator control | | Number of breakages in vicinity of coil joint (occurrence among 100 coils) | |
|---|---|---|---|---|---|---|---|---|
| | Si amount | Sheet thickness | Si amount | Sheet thickness | Steering roll | Press position | | |
| 1 | 2.5 | 2.0 | 2.5 | 2.0 | × | ○ | 5 | Comparative example |
| 2 | 2.5 | 2.2 | 3.0 | 2.4 | ○ | × | 3 | Comparative example |
| 3 | 2.8 | 2.2 | 3.0 | 2.4 | ○ | ○ | 4 | Comparative example |
| 4 | 3.0 | 2.4 | 3.0 | 2.0 | × | ○ | 0 | Invention example |
| 5 | 2.8 | 2.2 | 2.8 | 2.4 | ○ | × | 1 | Invention example |
| 6 | 2.8 | 2.2 | 2.5 | 2.0 | ○ | ○ | 0 | Invention example |
| 7 | 2.5 | 2.6 | 3.0 | 2.0 | ○ | ○ | 0 | Invention example |

The above experiment has confirmed that it is preferable to appropriately predict the shape of the steel sheet at a pre-rolling stage and appropriately control the subsequent operation of the actuator using the cold rolling method and the cold rolling mill according to the present invention. In addition, it has been confirmed that, by application of the present invention, it is not only possible to suppress occurrence of troubles such as shape defects and sheet breakage during cold rolling, but also to greatly contribute to improvement in productivity and quality in a rolling step and subsequent steps.

The above has described the embodiments as application of the invention made by the present inventors, in which the present invention is not limited by the description and drawings constituting a part of the disclosure of the present invention according to the present embodiments. That is, other embodiments, implementation examples, operational techniques, and the like made by those skilled in the art based on the present embodiment are all included in the scope of the present invention.

### Reference Signs List

- 1: COLD ROLLING MILL
- 2: PAY-OFF REEL
- 3: ENTRY-SIDE LOOPER
- 4: STEERING ROLL
- 5: COILER
- 100: ROLLING CONTROL DEVICE
- 200: ARITHMETIC UNIT
- 210: ARITHMETIC DEVICE
- 211: RANDOM ACCESS MEMORY (RAM)
- 212: READ ONLY MEMORY (ROM)
- 212a: PREDICTION MODEL GENERATION PROGRAM
- 212b: PREDICTION MODEL EXECUTION PROGRAM
- 213: ARITHMETIC PROCESSING SECTION
- 214: PREDICTION MODEL GENERATION SECTION
- 214a: TRAINING DATA ACQUISITION SECTION
- 214b: PREPROCESSING SECTION
- 214c: FIRST DATA TRANSFORMER
- 214d: MODEL GENERATION SECTION
- 214e: RESULT STORAGE SECTION
- 215: PREDICTION MODEL EXECUTION SECTION
- 215a: INFORMATION READING SECTION
- 215b: SECOND DATA TRANSFORMER
- 215c: ACTUATOR PREDICTION SECTION
- 215d: ACTUATOR DETERMINATION SECTION
- 215e: RESULT OUTPUT SECTION
- 220: INPUT DEVICE
- 230: STORAGE DEVICE
- 240: OUTPUT DEVICE
- 300: STEEL SHEET THREE-DIMENSIONAL INFORMATION MEASUREMENT DEVICE
- 400: OPERATION MONITORING DEVICE
- 501: INPUT LAYER
- 502: INTERMEDIATE LAYER
- 503: OUTPUT LAYER
- S: STEEL SHEET

## Claims

1. A cold rolling mill rolling condition setting method, which is a method of setting a target rolling condition of a cold rolling mill when a roll target material undergoes cold rolling using a prediction model that predicts a state of the roll target material that has undergone the cold rolling,
the prediction model being generated with an explanatory variable and an objective variable,
the explanatory variable being first multi-dimensional data obtained by transforming past rolling performance data including three-dimensional steel sheet information including information regarding a portion outside a sheet edge of the roll target material on an entry side of the cold rolling mill into multi-dimensional data,
the objective variable being a controlled variable of a steering roll and a press position of the cold rolling mill,
the method comprising a step of estimating at least one of the controlled variable of the steering roll and the press position of the cold rolling mill, the estimation being performed by inputting second multi-dimensional data to the prediction model, the second multi-dimensional data being generated from the three-dimensional steel sheet information including the information regarding the portion outside the sheet edge of the roll target material on the entry side of the cold rolling mill.

2. A cold rolling method comprising a step of performing cold rolling of a roll target material using a target rolling condition of a cold rolling mill changed using the cold rolling mill rolling condition setting method according to claim **1.**

3. A steel sheet manufacturing method comprising a step of manufacturing a steel sheet using the cold rolling method according to claim **2.**

4. A cold rolling mill rolling condition setting device, which is a device for setting a target rolling condition of a cold rolling mill when a roll target material undergoes cold rolling using a prediction model that predicts a state of the roll target material that has undergone the cold rolling,
the prediction model being generated with an explanatory variable and an objective variable,
the explanatory variable being first multi-dimensional data obtained by transforming past rolling performance data including three-dimensional steel sheet information including information regarding a portion outside a sheet edge of the roll target material on an entry side of the cold rolling mill into multi-dimensional data,
the objective variable being a controlled variable of a steering roll and a press position of the cold rolling mill,
the device comprising a means for estimating at least one of the controlled variable of the steering roll and the press position of the cold rolling mill, the estimation being performed by inputting second multi-dimensional data to the prediction model, the second multi-dimensional data being generated from the three-dimensional steel sheet information including the information regarding the portion outside the sheet edge of the roll target material on the entry side of the cold rolling mill.

5. A cold rolling mill comprising the cold rolling mill rolling condition setting device according to claim 4.
